# EUROPEAN PATENT SPECIFICATION

(11) **EP 3 035 645 B1**
(45) Date of publication and mention of the grant of the patent: **11.10.2017**
(21) Application number: 15193597.0
(22) Date of filing: 09.11.2015
(51) Int. Cl.: H04L 12/46, H04L 12/841, H04L 29/12, H04L 29/08

(54) **NETWORKING BASED REDIRECT FOR CDN SCALE-DOWN**
NETZWERKBASIERTE UMLEITUNG FÜR CDN-ABWÄRTSSKALIERUNG
REDIRECTION BASÉE SUR LA MISE EN RÉSEAU POUR MINIATURISATION CDN

(30) Priority: 16.12.2014 WO PCT/CN2014/093901
(43) Date of publication of application: 22.06.2016
(73) Proprietor: Cisco Technology, Inc., San Jose, CA 95134-1706 (US)
(72) Inventor: WANG, Qi, San Jose, CA 95148 (US); LE FAUCHEUR, Francois, 06560 Valbonne (FR)
(74) Representative: Hoarton, Lloyd Douglas Charles

(56) References cited:
- WO-A2-2010/102084
- VIMAL MATHEW ET AL: "Energy-efficient content delivery networks using cluster shutdown", 2013 INTERNATIONAL GREEN COMPUTING CONFERENCE PROCEEDINGS, 1 June 2013 (2013-06-01), pages 1-10, XP055248545, DOI: 10.1109/IGCC.2013.6604510 ISBN: 978-1-4799-0623-9
- VIMAL MATHEW ET AL: "Energy-aware load balancing in content delivery networks", INFOCOM, 2012 PROCEEDINGS IEEE, IEEE, 25 March 2012 (2012-03-25), pages 954-962, XP032179207, DOI: 10.1109/INFCOM.2012.6195846 ISBN: 978-1-4673-0773-4

## Description

### TECHNICAL FIELD

The present disclosure generally relates to CDN scale down.

### BACKGROUND

A content delivery network or content distribution network (CDN) is a large distributed system typically deployed in multiple data centers across the Internet. The goal of a CDN is to serve content to end-users with high availability and high performance. CDNs serve a large fraction of the Internet content, including web objects (text, graphics and scripts), downloadable objects (media files, software, documents), applications (e-commerce, portals), live streaming media, on-demand streaming media, and social networks.

A conventional content delivery network using cluster shutdown is disclosed in Vimal Matthew ET AL: "Energy-efficient content delivery networks using cluster shutdown"), 2013 International Green Computing Conference Proceedings, 1 June 2013 (2013-06-01), pages 1-10, DOI: 10.1109/IGCC.2013.6604510 ISBN: 987-1-4799-0623-9.

WO 2010/102084 A2 (WEI COACH [US]) 10 September 2010 describes a system comprising several virtual machines that can be shut down or activated depending on the current load of the network. If a machine has failed, the traffic can be redirected to other machines using e.g. DNS redirection.

VIMAL MATHEW ET AL: "Energy-aware load balancing in content delivery networks", INFOCOM, 2012 PROCEEDINGS IEEE, IEEE, 25 March 2012 describes a system wherein servers of a CDN can be shut down in order to save energy when these servers are being used under their capacity. An algorithm is proposed for efficient shutdown.

### SUMMARY OF THE INVENTION

According to one aspect of the present invention, there is provided a system as defined in claim 1 hereinafter.

According to another aspect of the present invention, there is provided a method as defined in claim 3 hereinafter.

### BRIEF DESCRIPTION OF THE DRAWINGS

The present disclosure will be understood and appreciated more fully from the following detailed description, taken in conjunction with the drawings in which:
Fig. 1 is a partly pictorial, partly block diagram view of a content delivery system constructed and operative in accordance with an embodiment of the present invention;
Fig. 2 is a partly pictorial, partly block diagram view of the content delivery system of Fig. 1 performing a controlled shutdown of an edge cache;
Fig. 3 is a flow chart of the steps performed in the controlled shut down of an edge cache in the system of Fig. 1;
Fig. 4 is a more detailed partly pictorial, partly block diagram view of the content delivery system of Fig. 1 showing a client retrieving content from an edge cache;
Fig. 5 is a partly pictorial, partly block diagram view of the content delivery system of Fig. 1 performing a controlled shutdown of an edge cache based on re-assigning the virtual IP address of the edge cache to be shutdown;
Fig. 6 is a partly pictorial, partly block diagram view of the content delivery system of Fig. 1 performing a controlled shutdown of an edge cache based on changing a DNS mapping;
Fig. 7 is a partly pictorial, partly block diagram view of the content delivery system of Fig. 1 using load balancer groups; and
Fig. 8 is a partly pictorial, partly block diagram view of the content delivery system of Fig. 1 performing a controlled shutdown of an edge cache using load balancer groups.

### DESCRIPTION OF EXAMPLE EMBODIMENTS

### OVERVIEW

There is provided in accordance with an embodiment of the present invention, a system for orchestration of a content delivery network (CDN), the system including a processor, and a memory to store data used by the processor, wherein the processor is operative to monitor a plurality of edge caches in the CDN, determine that a first edge cache of the plurality of edge caches should be shutdown, determine that any clients downloading content from the first edge cache should continue downloading the content from a second edge cache of the plurality of edge caches, instruct a network resource to perform an action so that client content requests addressed to the first edge cache are directed to the second edge cache, without the first edge cache needing to receive the client content requests, and trigger shutdown of the first edge cache.

### DESCRIPTION CONTINUED

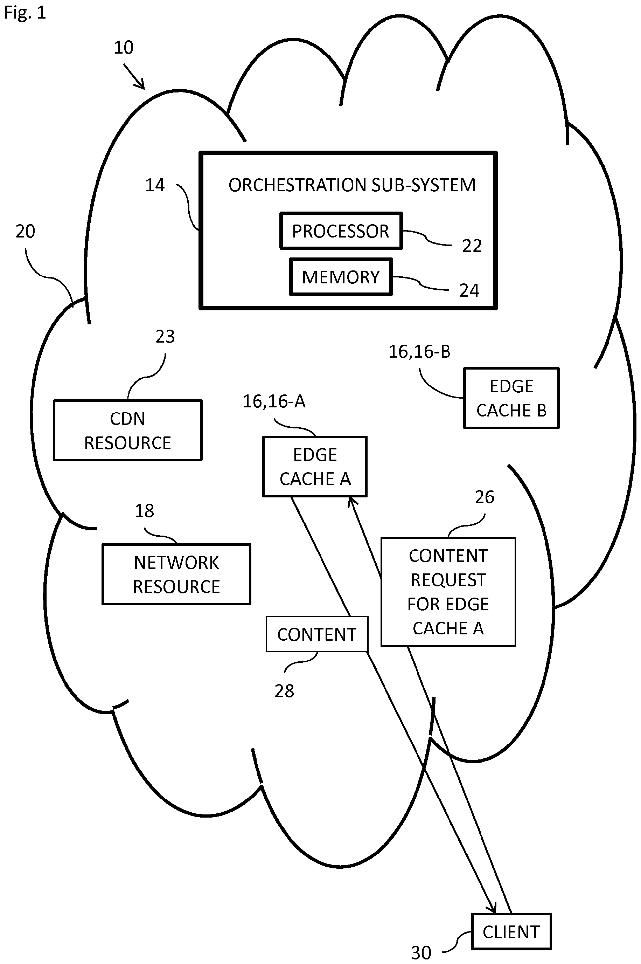

Reference is now made to Fig. 1, which is a partly pictorial, partly block diagram view of a content delivery system 10 constructed and operative in accordance with an embodiment of the present invention.

The content delivery system 10 includes a content delivery network (CDN) operating in a network infrastructure 20. The content delivery network typically includes a CDN orchestration sub-system 14, a plurality of edge caches 16 and other CDN components such as a request router (not shown). Fig. 1 shows two edge caches 16, one is labeled edge cache 16-A and another is labeled edge cache 16-B. The orchestration sub-system 14 is operative to monitor and manage the creation and shutdown of the edge caches 16 as will be described in more detail below.

The network infrastructure 20 typically includes a network resource 18 and other network components well known in the art (not shown). The network infrastructure 20 may be implemented in a cloud environment with a virtualization layer above the real resources where the network resource 18 is a cloud orchestration function/system for composing of architecture, tools and processes used by humans to deliver a defined service, stitching of software and hardware components together to deliver a defined service, and connecting and automating of work flows when applicable to deliver a defined service.

Fig. 1 shows an end-user client device 30 sending a content request 26 to the edge cache 16-A and receiving content 28 from the edge-cache 16-A. The content 28 may be divided into segments, for example, as part of an HTTP (Hypertext Transfer Protocol) adaptive bitrate (ABR) implementation. The content may be any suitable content, for example, but not limited to, audio and/or video or other data.

The orchestration sub-system 14 typically includes a processor 22 and a memory 24 to store data used by the processor 22. The processor 22 is operative to: monitor the edge caches 16 in the CDN, for example, for under-utilization; determine that one of the edge caches 16 should be shutdown (edge cache 16-A in the example of Fig. 1) for example, due to under-utilization or maintenance; and determine that any clients downloading content 28 from the edge cache 16-A should continue downloading the content 28 from another one of the edge caches 16 (edge cache 16-B in the example of Fig. 1).

The processor 22 of the orchestration sub-system 14 is operative to notify a CDN resource 23 such as the CDN request router (not shown) that new content requests 26 should not be redirected to the edge cache 16-A, but instead to one of the other edge caches 16 (e.g. edge cache 16-B).

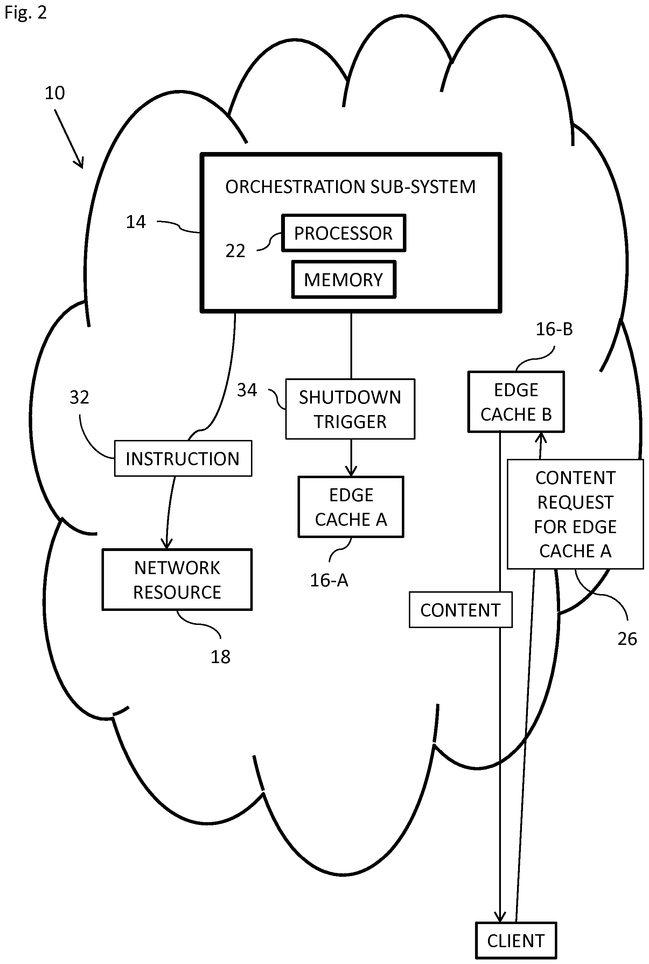

Reference is now made to Fig. 2, which is a partly pictorial, partly block diagram view of the content delivery system 10 of Fig. 1 performing a controlled shutdown of the edge cache 16-A.

The processor 22 of the orchestration sub-system 14 is operative to instruct the network resource 18 (via an instruction 32) to perform an action resulting in a networking re-direct, typically cloud based, so that client content requests 26, addressed to the edge cache 16-A, are directed to the edge cache 16-B, without the edge cache 16-A needing to receive the content requests 26. In other words the re-direct of the content request 26 may be performed without having the edge cache 16-A being involved in the re-direct.

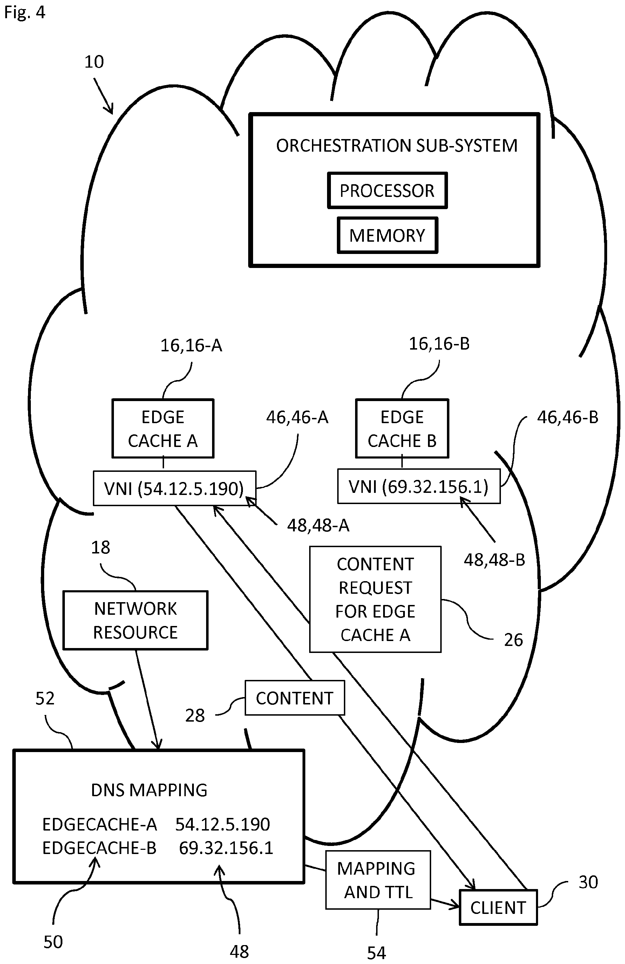

Three different methods of providing network based re-directs are described in more detail with reference to Figs. 4-8 below.

Once the network re-direct is in place, so that the content request 26 to edge cache 16-A are redirected to the edge cache 16-B, the processor 22 is operative to trigger shutdown (block 34) of the edge cache 16-A.

It should be noted that a CDN Management System component may be involved as an intermediary agent in some of the above steps. The CDN Management System component typically performs device-level and CDN-level tasks such as monitoring, configuring, upgrading, and trouble-shooting. The tasks may be performed in combination with the orchestration sub-system 14. For example, when the orchestration sub-system 14 creates a new edge cache, the orchestration sub-system 14 may communicate with the CDN Management System to notify it of the new edge cache and to request the CDN Management System to recognize the new edge cache, to configure the new edge cache and incorporate the new edge cache in to the CDN.

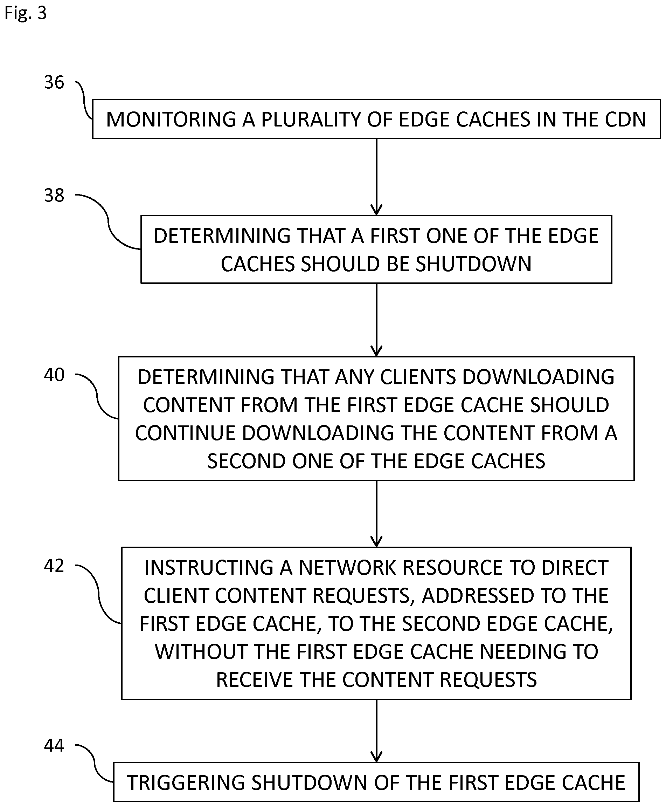

Reference is now made to Fig. 3, which is a flow chart of the steps performed in the controlled shut down of the edge cache 16-A (Fig. 2) in the system 10 of Fig. 1.

The steps include: monitoring the edge caches 16 (Fig. 2) in the CDN (block 36); determining that the edge cache 16-A (Fig. 2) should be shutdown (block 38); determining that any clients downloading content 28 (Fig. 1) from the edge cache 16-A should continue downloading the content 28 from the edge cache 16-B (block 40); instructing the network resource 18 (Fig. 2) to direct client content requests 26 (Fig. 2), addressed to the edge cache 16-A, to the edge cache 16-B, without the edge cache 16-A needing to receive the content requests 26 (block 42); and triggering shutdown of the edge cache 16-A (block 44).

Reference is now made to Fig. 4, which is a more detailed partly pictorial, partly block diagram view of the content delivery system 10 of Fig. 1 showing the client 30 retrieving the content 28 from the edge cache 16-A.

Each edge cache 16 is allocated its own virtual network interface (VNI) 46 having a virtual Internet Protocol address 48. In the example, of Fig. 4, the edge cache 16-A is allocated a virtual network interface 46-A having a virtual Internet Protocol (IP) address 48-A with a value of 54.12.5.190. The edge cache 16-B is allocated a virtual network interface 46-B having a virtual IP address 48-B with a value of 69.32.156.1.

A mapping between a hostname 50 of each cache 16 and the associated virtual IP address 48 of each edge cache 16 is managed by a domain name system (DNS) mapping server 52, typically in conjunction with the network resource 18. In particular, in the example of Fig. 4, the edge cache 16-A has a hostname EDGECACHE-A which is mapped to the virtual Internet Protocol (IP) address 54.12.5.190 and the edge cache 16-B has a hostname EDGECACHE-B which is mapped to a the virtual IP address 69.32.156.1.

The client 30 is typically operative to periodically retrieve the virtual Internet Protocol address 48 for the edge cache 16-A from the DNS mapping server 52. When the virtual Internet Protocol address 48 is retrieved, a time-to-live (TTL) is also retrieved (block 54). The TTL indicates when the virtual Internet Protocol address 48 should be retrieved again by the client 30. Periodic retrieval of the virtual Internet Protocol address 48 for the edge cache 16-A from the DNS mapping server 52 is performed as the virtual Internet Protocol address 48 for the edge cache 16-A may be updated from time to time.

The client 30 requests content based on the virtual Internet Protocol address 48 retrieved from the DNS mapping server 52. The content request 26 is directed by the network to the edge cache 16-A via the virtual network interface 46-A having the associated virtual Internet Protocol address 48-A.

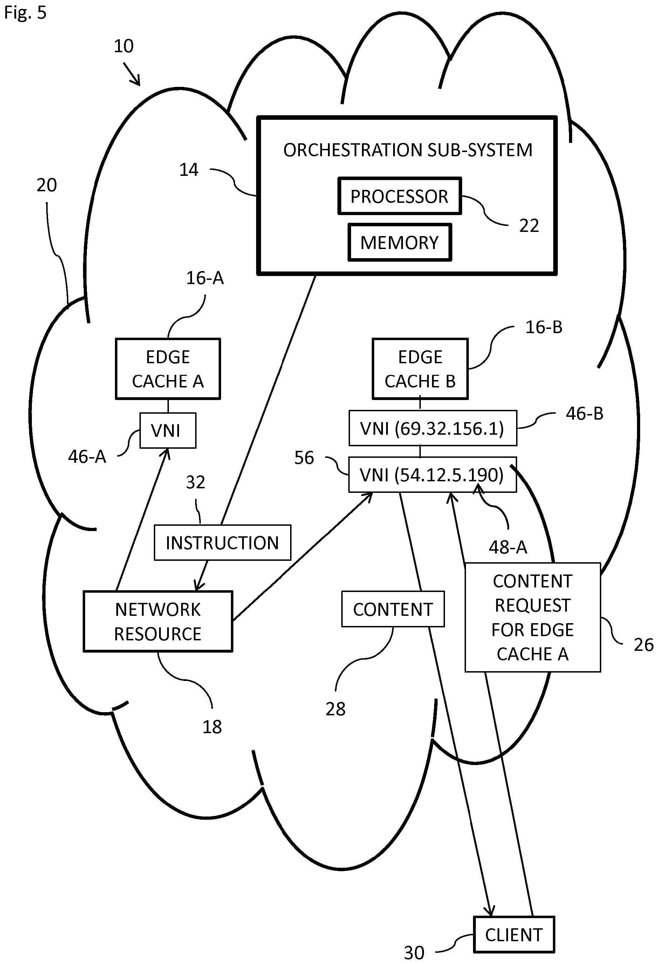

Reference is now made to Fig. 5, which is a partly pictorial, partly block diagram view of the content delivery system 10 of Fig. 1 performing a controlled shutdown of the edge cache 16-A based on re-assigning the virtual IP address 48-A of the edge cache 16-A to be shutdown.

The processor 22 is operative to instruct the network resource 18 (via the instruction 32) to create a new virtual network interface 56 (in addition to the virtual network interface 46-B) for the edge cache 16-B and re-allocate the virtual IP address 48-A (and possibly hostname) to the new virtual network interface 56, from the virtual network interface 46-A, so that content requests 26 from the client 30 to the edge cache 16-A are re-directed by the network infrastructure 20 to the edge cache 16-B.

From the viewpoint of the client 30 making use of the CDN, a scale down is transparent at the Hypertext Transfer Protocol (HTTP) layer and is basically seen as a Transmission Control Protocol (TCP) connection reset at the TCP/IP layers as will be explained in more detail below.

The cloud-based network infrastructure 20 ensures that routing (of packets destined to the reallocated IP address 48-A) adapts in a timely fashion so that no or few packets are lost during the IP address re-allocation as will now be described in more detail below.

Prior to the scale down decision being made, the client 30 issues its content/segment requests 26 for a given uniform resource locator (URL) pattern (of the form http://hostname/path/content-name) to a given IP address 48-A. The IP address 48-A had first been obtained by the client from the DNS mapping server 52 as the IP address mapped to the hostname of the edge cache 16-A that was contained in the URL. The IP address 48-A is routed by a cloud networking component (not shown) to the edge cache 16-A. The orchestration sub-system 14 sends the instruction 32 to the network resource 18, that in turn re-allocates the IP address 48-A to the newly created virtual network interface 56 tied to the edge cache 16-B. It should be noted that instead of creating the new virtual network interface 56, the processor 22 may be operative to instruct the network resource 18 to re-allocate the virtual IP 48-A to the virtual network interface 46-B allocated to the edge cache 16-B. After the virtual IP address 48-A is re-allocated to the virtual network interface 56, the client 30 may briefly lose IP connectivity and is also likely to experience a TCP connection reset since the edge cache 16-B is unlikely to have inherited the state information associated with the TCP connection that was established on the edge cache 16-A and that is required to maintain that TCP connection. The TCP connection re-establishment is requested by the client 30 to the same IP address, but now the TCP connection is established by the edge cache 16-B. The client 30 still issues segment requests 26 to the same uniform resource locator (URL) pattern and to the same IP address 48-A. The edge cache 16-B uses configuration information to acquire and serve the requested content segments 28. The above helps ensure that sessions affected by a scale down are lightly impacted akin to a brief IP connectivity interruption, thereby increasing the likelihood of no video interruption or a transient bandwidth reduction of the ABR adaptive bitrate.

It should be noted that the virtual network interface 46-A and the new virtual network interface 56 are typically disposed on different virtual machines.

Once all, or most, of the sessions have been offloaded away from the edge cache 16-A to the edge cache 16-B, the CDN orchestration sub-system 14 triggers shutdown of the edge cache 16-A.

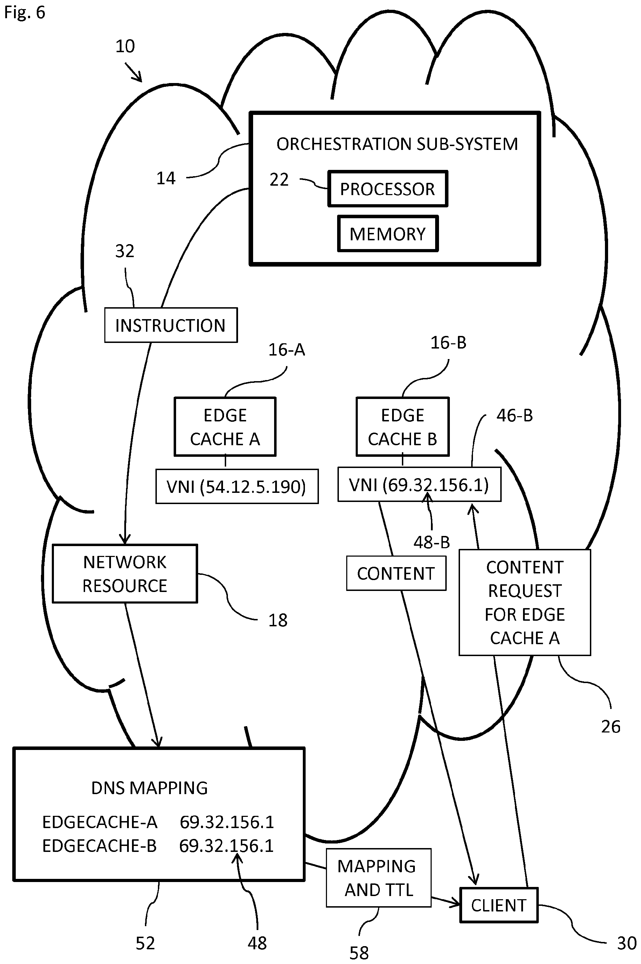

Reference is now made to Fig. 6, which is a partly pictorial, partly block diagram view of the content delivery system 10 of Fig. 1 performing a controlled shutdown of the edge cache 16-A based on changing a DNS mapping.

The processor 22 is operative to instruct the network resource 18 (via the instruction 32) to change the mapping of the hostname of the edge cache 16-A so that the hostname is mapped to the virtual Internet Protocol address 48-B assigned to the virtual network interface 46-B of the edge caches 16-B. The network resource 18 instructs the DNS mapping server 52 to change the mapping of the hostname of the edge cache 16-A so that the hostname is mapped to the virtual Internet Protocol address 48-B. It should be noted that in this embodiment the network resource 18 and the DNS mapping server 52 may be the same entity such that the instruction 32 is sent directly by the orchestration sub-system 14 to the DNS mapping server 52.

When the cached DNS entry for the hostname of the edge cache 16-A times-out (in accordance with the previously received TTL (block 54 of Fig. 4) for the record of the edge cache 16-A ), the client 30 re-requests the DNS resolution for the edge cache 16-A and receives the new DNS resolution (block 58). The TTL may be from a few seconds to several minutes duration by way of example only. In general, the processor 22 is operative to instruct the network resource 18 to set the time-to-live (TTL) associated with the mapping between the hostname and the IP address to be a certain value which is typically less than 5 minutes but may be greater, or even as low as several seconds. A TTL of 30 seconds may be appropriate in many cases.

Once the new DNS resolution for the edge cache 16-A has been retrieved by the client 30, the virtual Internet Protocol address 48 mapped to the hostname of the edge cache 16-A is the virtual Internet Protocol address 48 of the edge cache 16-B (69.32.156.1). Therefore, the client 30 creates the content requests 26 for retrieving content from the edge cache 16-A using the virtual Internet Protocol address 48 of the edge cache 16-B with a TCP connection establishment on initial communication with the edge cache 16-B. This embodiment does not typically need any involvement of a cloud-based routing subsystem since the mapping between IP addresses and virtual machines does not change. The orchestration sub-system 14 typically waits a certain time, greater than the TTL, which is sufficiently long enough to ensure that all or most sessions that were using the edge cache 16-A have been redirected to the edge cache 16-B, and then trigger shutdown the edge cache 16-A.

Since the hostname of a scaled down cache instance continues to be used after the instance is shutdown, a suitable hostname management mechanism needs to be implemented to make sure the hostname of a scaled down cache instance is not re-allocated to a new cache instance in a future scale up (at least not until the hostname is no longer being used).

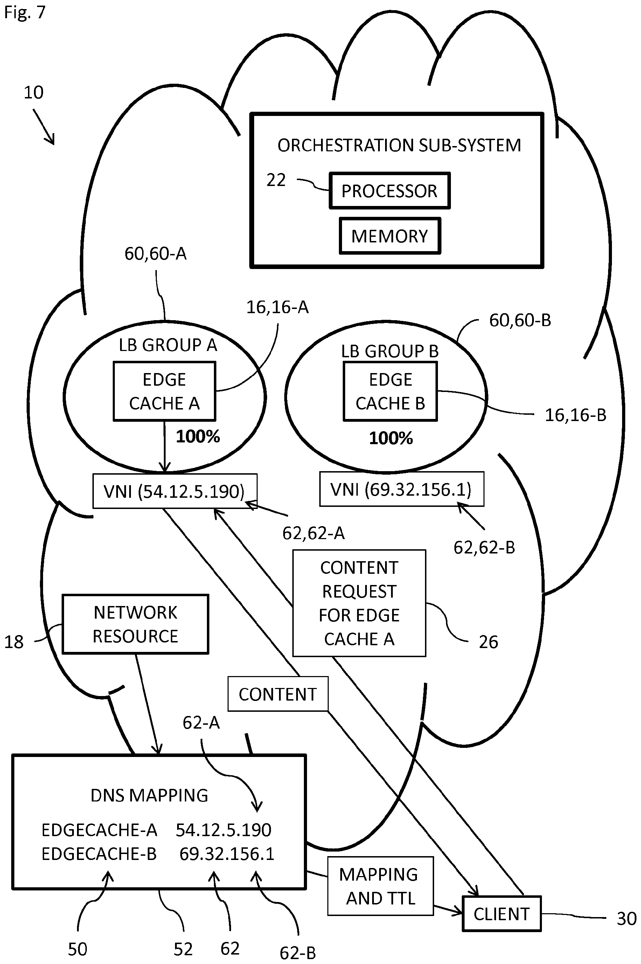

Reference is now made to Fig. 7, which is a partly pictorial, partly block diagram view of the content delivery system 10 of Fig. 1 using load balancer groups 60.

In this embodiment, each of the edge caches 16 is allocated to its own load balancer group 60.

In the example of Fig. 7, the edge cache 16-A is allocated to a load balancer group 60-A. The hostname 50 of the edge cache 16-A is mapped (by the DNS mapping server 52) to a virtual Internet Protocol (IP) address 62-A of the load balancer group 60-A. Similarly, the edge cache 16-B is allocated to a load balancer group 60-B. The hostname 50 of the edge cache 16-B is mapped (by the DNS mapping server 52) to a virtual Internet Protocol (IP) address 62-B of the load balancer group 60-B.

The load balancer group 60-A is typically established by the processor 22 instructing the network resource 18 to: create the load balancer group 60-A and allocate the edge cache 16-A to the load balancer group 60-A; and map the hostname 50 of the edge cache 16-A to the virtual Internet IP address 62-A of the load balancer group 60-A.

The load balancer group 60-B is typically established by the processor 22 instructing the network resource 18 to: create the load balancer group 60-B and allocate the edge cache 16-B to the load balancer group 60-B; and map the hostname 50 of the edge cache 16-B to the virtual Internet IP address 62-B of the load balancer group 60-B.

The network resource 18 is operative to configure each load-balancer group 60 to direct 100% of content requests to the edge cache 16 allocated to that load balancer group 60. The network resource 18 is operative to ensure that the DNS mapping server 52 is configured to return the load-balancer group 60 virtual IP address 62 for the hostname 50 of the edge cache 16 being requested. Therefore, when the client 30 creates the content request 26, the content request 26 is addressed to the virtual Internet Protocol (IP) address 62 of the load balancer group 60 to which the relevant edge cache 16 is allocated. In the example of Fig. 7, the content request 26 for retrieving content from the edge cache 16-A is addressed to the IP address 54.12.5.190 of the load balancer group 60-A which is mapped to the hostname EDGECACHE-A by the DNS mapping server 52.

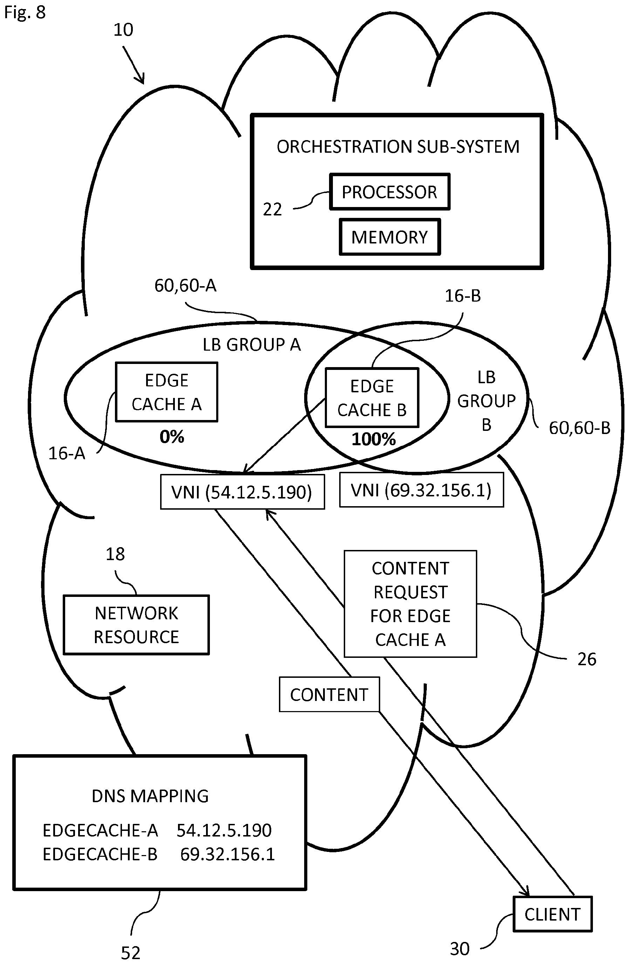

Reference is now made to Fig. 8, which is a partly pictorial, partly block diagram view of the content delivery system 10 of Fig. 1 performing a controlled shutdown of the edge cache 16-A using the load balancer groups 60.

The processor is operative to instruct the network resource 18 to: allocate the edge cache 16-B to the load balancer group 60-A in addition to being allocated to the load balancer group 60-B; and configure the load balancer group 60-A to direct substantially all, generally 100%, of the arriving client content requests 26 to the edge cache 16-B in the load balancer group 60-A. As a result, all the subsequent content requests 26 (e.g. ABR segment requests) from the client 30 towards the hostname of the edge cache 16-A are now directed by the load-balancer 60-A to the edge cache 16-B. This embodiment does not require any changes at the DNS mapping server 52, since the mapping between the hostname and the virtual IP address of the edge cache 16-A does not change during shutdown processing.

The processor 22 is operative to instruct the network resource 18 to shutdown the edge cache 16-A.

The processor 22 is also operative to instruct the network resource 18 to shutdown the load balancer group 60-A once all sessions using the load balancer group 60-A are terminated.

The edge cache 16-A is typically shutdown prior to shutdown of the load balancer group 60-A. However, the edge cache 16-A may be shutdown after the shutdown of the load balancer group 60-A.

It should be noted that processor 22 generally does not know with certainty if and when all sessions using the load balancer group 60-A are actually terminated. Therefore, termination of the sessions using the load balancer group 60-A may be estimated with sufficient likelihood or checking for session activity.

It should be noted that all three embodiments described above may be implemented regardless of which CDN request redirection method is used to initially redirect the ABR session client 30 to the edge cache 16-A, for example, but not limited to, HTTP, DNS, application programming interface (API).

All three embodiments generally result in a TCP connection reset, from the viewpoint of the client 30, since the edge cache 16 is changed.

The above embodiments have been described assuming transport over HTTP over TCP. It will be appreciated by those ordinarily skilled in the art that other transport stacks may be used, for example, but not limited to, HTTP over Quick UDP Internet Connections (QUIC) over User Datagram Protocol (UDP).

In practice, some or all of these functions may be combined in a single physical component or, alternatively, implemented using multiple physical components. These physical components may comprise hard-wired or programmable devices, or a combination of the two. In some embodiments, at least some of the functions of the processing circuitry may be carried out by a programmable processor under the control of suitable software. This software may be downloaded to a device in electronic form, over a network, for example. Alternatively or additionally, the software may be stored in tangible, non-transitory computer-readable storage media, such as optical, magnetic, or electronic memory.

It is appreciated that software components may, if desired, be implemented in ROM (read only memory) form. The software components may, generally, be implemented in hardware, if desired, using conventional techniques. It is further appreciated that the software components may be instantiated, for example: as a computer program product or on a tangible medium. In some cases, it may be possible to instantiate the software components as a signal interpretable by an appropriate computer, although such an instantiation may be excluded in certain embodiments of the present invention.

It will be appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable sub-combination.

It will be appreciated by persons skilled in the art that the present invention is not limited by what has been particularly shown and described hereinabove. Rather the scope of the invention is defined by the appended claims.

When used in this specification and claims, the terms "comprises" and "comprising" and variations thereof mean that the specified features, steps or integers are included. The terms are not to be interpreted to exclude the presence of other features, steps or components.

## Claims

1. A system for orchestration of a content delivery network, CDN, the system comprising: a processor (22); and a memory (24) to store data used by the processor (22), wherein the processor (22) is operative to:
monitor a plurality of edge caches (16) in the CDN;
determine that a first edge cache (16-A) of the plurality of edge caches (16) should be shutdown;
determine that any clients (30) downloading content (28) from the first edge cache (16-A) should continue downloading the content (28) from a second edge cache (16-B) of the plurality of edge caches (16), wherein: the first edge cache (16-A) has a first hostname which is mapped to a first Internet Protocol, IP, address (46-A); and the second edge cache (16-B) has a second hostname which is mapped to a second IP address (46-B);
instruct a network resource (18) to set a time-to-live, TTL, associated with the mapping between the first hostname and the first IP address (46-A) to be less than 5 minutes;
instruct the network resource (18) to perform an action so that client content requests addressed to the first edge cache (16-A) are directed to the second edge cache (16-B), without the first edge cache (16-A) needing to receive the client content requests, wherein the processor (22) is operative to instruct the network resource (18) to change the mapping of the first hostname so that the first hostname is mapped to the second IP address (46-B); and then
trigger shutdown of the first edge cache (16-A).

2. The system according to claim 1, wherein the processor (22) is operative to notify a CDN resource (18) that new content requests should not be redirected to the first edge cache (16-A), but instead to another edge cache of the plurality of edge caches (16).

3. A method for orchestration of a content delivery network, CDN, the method comprising:
monitoring a plurality of edge caches (16) in the CDN;
determining that a first edge cache (16-A) of the plurality of edge caches (16) should be shutdown;
determining that any clients (30) downloading content (28) from the first edge cache (16-A) should continue downloading the content (28) from a second edge cache (16-B) of the plurality of edge caches (16), wherein: the first edge cache (16-A) has a first hostname which is mapped to a first Internet Protocol, IP, address (46-A); and the second edge cache (16-B) has a second hostname which is mapped to a second IP address (46-B);
instructing a network resource (18) to set a time-to-live, TTL, associated with the mapping between the first hostname and the first IP address (46-A) to be less than 5 minutes;
instructing the network resource (18) to perform an action so that client content requests addressed to the first edge cache (16-A) are directed to the second edge cache (16-B) without the first edge cache (16-A) needing to receive the client content requests, the action including instructing the network resource (18) to change the mapping of the first hostname so that the first hostname is mapped to the second IP address (46-B); and then
triggering shutdown of the first edge cache (16-A).

4. The method according to claim 3, further comprising notifying a CDN resource (18) that new content requests should not be redirected to the first edge cache (16-A), but instead to another edge cache of the plurality of edge caches (16).

## Patentansprüche

1. Ein System zur Orchestrierung eines Content-Delivery-Netzwerks, CDN, wobei das System umfasst: einen Prozessor (22); und einen Speicher (24) zum Speichern der vom Prozessor (22) verwendeten Daten, wobei der Prozessor (22) betriebsfähig ist, Folgendes zu tun:
Überwachen einer Vielzahl von Edge-Caches (16) im CDN; Bestimmen, dass ein erster Edge-Cache (16-A) der Vielzahl von Edge-Caches (16) abgeschaltet werden sollte;
Bestimmen, dass irgendwelche Clients (30), die Content (28) aus dem ersten Edge-Cache (16-A) herunterladen, fortfahren sollten, den Content (28) von einem zweiten Edge-Cache (16-B) der Vielzahl von Edge-Caches (16) herunterzuladen, wobei: der erste Edge-Cache (16-A) einen ersten Hostnamen hat, der mit einer ersten Internet-Protokoll- bzw. IP-Adresse (46-A) gemappt ist; und der zweite Edge-Cache (16-B) einen zweiten Hostnamen hat, der mit einer zweiten IP-Adresse (46-B) gemappt ist;
einer Netzwerkressource (18) zu befehlen eine "time-to-live", TTL, die mit dem Mapping zwischen dem ersten Hostnamen und der ersten IP-Adresse (46-A) verbunden ist, auf weniger als 5 Minuten einzustellen;
der Netzwerkressource (18) zu befehlen eine Handlung auszuführen, sodass Client-Content-Anforderungen, die an den ersten Edge-Cache (16-A) adressiert sind, zum zweiten Edge-Cache (16-B) geleitet werden, ohne dass der erste Edge-Cache (16-A) die Client-Content-Anforderungen zu empfangen braucht, wobei der Prozessor (22) betriebsfähig ist, der Netzwerkressource (18) zu befehlen, das Mapping des ersten Hostnamens zu ändern, sodass der erste Hostname zur zweiten IP-Adresse (46- B) gemappt wird; und danach
das Abschalten des ersten Edge-Caches (16-A) zu triggern.

2. Das System nach Anspruch 1, wobei der Prozessor (22) betriebsfähig ist, eine CDN-Ressource (18) zu benachrichtigen, dass neue Content-Anforderungen nicht zum ersten Edge-Cache (16-A), sondern stattdessen zu einem anderen Edge-Cache der Vielzahl der Edge-Caches (16) umgeleitet werden sollten.

3. Ein Verfahren zur Orchestrierung eines Content-Delivery-Netzwerks, CDN, wobei das Verfahren umfasst:
Überwachen einer Vielzahl von Edge-Caches (16) im CDN; bestimmen, dass ein erster Edge-Cache (16-A) der Vielzahl von Edge-Caches (16) abgeschaltet werden sollte;
Bestimmen, dass irgendwelche Clients (30), die Content (28) aus dem ersten Edge-Cache (16-A) herunterladen, fortfahren sollten, den Content (28) von einem zweiten Edge-Cache (16-B) der Vielzahl von Edge-Caches (16) herunterzuladen, wobei: der erste Edge-Cache (16-A) einen ersten Hostnamen hat, der mit einer ersten Internet-Protokoll- bzw. IP-Adresse (46-A) gemappt ist
und der zweite Edge-Cache (16-B) einen zweiten Hostnamen hat, der mit einer zweiten IP-Adresse (46-B) gemappt ist;
einer Netzwerkressource (18) zu befehlen eine "time-to-live", TTL, die mit dem Mapping zwischen dem ersten Hostnamen und der ersten IP-Adresse (46-A) verbunden ist, auf weniger als 5 Minuten einzustellen;
der Netzwerkressource (18) zu befehlen eine Handlung auszuführen, sodass Client-Content-Anforderungen, die an den ersten Edge-Cache (16-A) adressiert sind, zum zweiten Edge-Cache (16-B) geleitet werden, ohne dass der erste Edge-Cache (16-A) die Client-Content-Anforderungen zu empfangen braucht, wobei die Handlung einschließt der Netzwerkressource (18) zu befehlen, das Mapping des ersten Hostnamens zu ändern, sodass der erste Hostname zur zweiten IP-Adresse (46- B) gemappt wird; und danach das Abschaltendes ersten Edge-Caches (16-A) zu triggern.

4. Das Verfahren nach Anspruch 3, das ferner das Benachrichtigen einer CDN-Ressource (18) umfasst, dass neue Content-Anforderungen nicht zum ersten Edge-Cache (16-A), sondern stattdessen zu einem anderen Edge-Cache der Vielzahl von Edge-Caches (16) umgeleitet werden sollten.

## Revendications

1. Système d'orchestration d'un réseau de fourniture de contenu (CDN), le système comprenant : un processeur (22) ; et une mémoire (24) permettant de stocker des données utilisées par le processeur (22), le processeur (22) permettant de :
surveiller une pluralité de mémoires cache de périphérie (16) dans le CDN ;
déterminer qu'une première mémoire cache de périphérie (16-A) de la pluralité de mémoires cache (16) doit être arrétée ;
déterminer que des clients (30) quelconques qui téléchargent un contenu (28) de la première mémoire cache de périphérie (16-A) doivent continuer à télécharger le contenu (28) d'une seconde mémoire cache de périphérie (16-B) de la pluralité de mémoires cache (16),
la première mémoire cache de périphérie (16-A) ayant un premier nom d'hôte correspondant à une première adresse sur protocole Internet (IP) (46-A), et
la seconde mémoire cache de périphérie (16-B) ayant un second nom d'hôte correspondant à une seconde adresse IP (46-B) ;
donner l'instruction à une ressource de réseau (18) de régler une durée de vie (TTL), associée à la correspondance entre le premier nom d'hôte et la première adresse IP (46-A), à moins de 5 minutes ;
donner l'instruction à la ressource de réseau (18) de réaliser une action de sorte que des demandes de contenu de client adressées à la première mémoire cache de périphérie (16-A) soient dirigées vers la seconde mémoire cache de périphérie (16-B), sans que la première mémoire cache de périphérie (16-A) n'ait besoin de recevoir les demandes de contenu de client, le processeur (22) permettant de donner l'instruction à la ressource de réseau (18) de changer la correspondance du premier nom d'hôte, de sorte que le premier nom d'hôte corresponde à la seconde adresse IP (46-B) ; puis
déclencher l'arrêt de la première mémoire cache de périphérie (16-A).

2. Système selon la revendication 1, dans lequel le processeur (22) permet de notifier à une ressource de CDN (18) que de nouvelles demandes de contenu ne doivent pas être redirigées vers la première mémoire cache de périphérie (16-A), mais plutôt vers une autre mémoire cache de périphérie de la pluralité de mémoires cache de périphérie (16).

3. Procédé d'orchestration d'un réseau de fourniture de contenu (CDN), le procédé consistant à :
surveiller une pluralité de mémoires cache de périphérie (16) dans le CDN ; déterminer qu'une première mémoire cache de périphérie (16-A) de la pluralité de mémoires cache (16) doit être arrétée ;
déterminer que des clients (30) quelconques qui téléchargent un contenu (28) de la première mémoire cache de périphérie (16-A) doivent continuer à télécharger le contenu (28) d'une seconde mémoire cache de périphérie (16-B) de la pluralité de mémoires cache (16),
la première mémoire cache de périphérie (16-A) ayant un premier nom d'hôte correspondant à une première adresse sur protocole Internet (IP) (46-A), et
la seconde mémoire cache de périphérie (16-B) ayant un second nom d'hôte correspondant à une seconde adresse IP (46-B) ;
donner l'instruction à une ressource de réseau (18) de régler une durée de vie (TTL), associée à la correspondance entre le premier nom d'hôte et la première adresse IP (46-A), à moins de 5 minutes ;
donner l'instruction à la ressource de réseau (18) de réaliser une action de sorte que des demandes de contenu de client adressées à la première mémoire cache de périphérie (16-A) soient dirigées vers la seconde mémoire cache de périphérie (16-B), sans que la première mémoire cache de périphérie (16-A) n'ait besoin de recevoir les demandes de contenu de client, l'action consistant à donner l'instruction à la ressource de réseau (18) de changer la correspondance du premier nom d'hôte, de sorte que le premier nom d'hôte corresponde à la seconde adresse IP (46-B) ; puis déclencher l'arrêt de la première mémoire cache de périphérie (16-A).

4. Procédé selon la revendication 3, consistant en outre à notifier à une ressource de CDN (18) que de nouvelles demandes de contenu ne doivent pas être redirigées vers la première mémoire cache de périphérie (16-A), mais plutôt vers une autre mémoire cache de périphérie de la pluralité de mémoires cache de périphérie (16).
